# EUROPEAN PATENT SPECIFICATION

(11) **EP 2 665 345 B1**
(45) Date of publication and mention of the grant of the patent: **07.08.2019**
(21) Application number: 12777101.2
(22) Date of filing: 16.04.2012
(51) Int. Cl.: H05B 37/02, B60Q 1/00, H05B 39/04, H02J 7/14, H02P 9/30, H05B 39/08

(54) **CONTROL CIRCUIT AND CONTROL METHOD**
STEUERSCHALTUNG UND STEUERVERFAHREN
CIRCUIT DE COMMANDE ET PROCÉDÉ DE COMMANDE

(30) Priority: 28.04.2011 JP 2011102388
(43) Date of publication of application: 20.11.2013
(73) Proprietor: Shindengen Electric Manufacturing Co., Ltd., Tokyo 100-0004 (JP)
(72) Inventor: TAKASHIMA, Toyotaka, Hanno-shi, Saitama 357-0036 (JP)
(74) Representative: Dr. Weitzel & Partner
(86) International application number: PCT/JP2012/060252
(87) International publication number: WO 2012/147552

(56) References cited:
- EP-A2- 0 936 720
- EP-A2- 1 087 643
- JP-A- 2001 093 680
- JP-A- 2001 130 314
- JP-A- 2001 130 314
- JP-A- 2003 212 172
- JP-A- 2006 103 646
- JP-A- 2009 218 084

## Description

### TECHNICAL FIELD

The present invention relates to a control circuit and a control method.

### BACKGROUND ART

There have been control circuits for vehicles or the like, which control a power generator that rotates in conjunction with an engine to generate the alternate voltage, light a lamp with the generated alternate voltage, and thus charge a battery. Such rectification methods for control circuits include a single-phase half-wave rectification method.

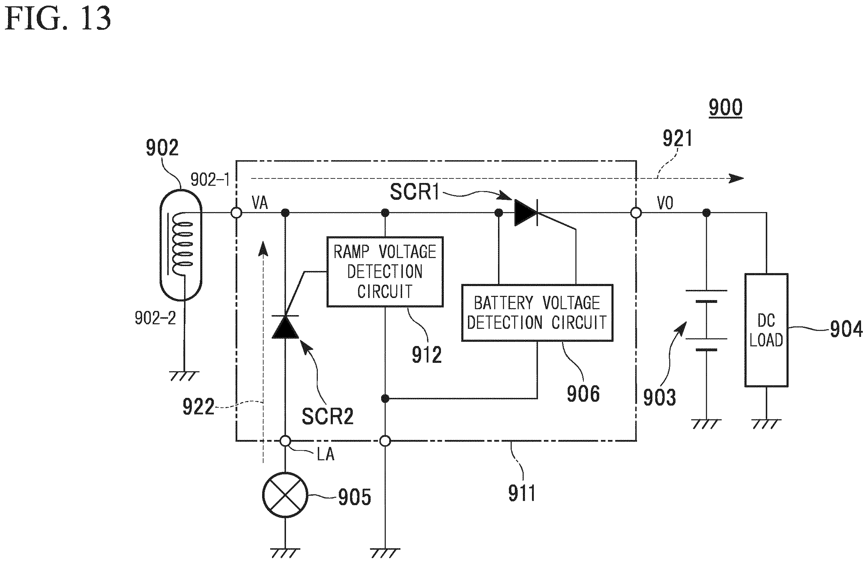

FIG. 13 is a circuit diagram illustrating a lamp lighting and battery charging device according to a related art.

In the lamp lighting and battery charging device shown in FIG. 13, a control circuit 911 is coupled to a power generator 902, a lamp 905, a battery 903, and a DC load 904. The control circuit 911 controls a thyristor SCR1 to half-wave rectify the AC voltage VA output from the generator 902 to convert the AC voltage VA into the output voltage VO, and supply the output voltage VO to the battery 903 and a vehicle load (a lamp load and various electric loads). Additionally, the control circuit 911 includes: the thyristor SCR1; a thyristor SCR2; a battery voltage detection circuit 906; and a lamp voltage detection circuit 912.

When the voltage of a terminal 902-1 of the power generator 902 is positive and the voltage of a terminal 902-2 is negative, the AC voltage VA generated by the power generator 902 is half-wave rectified by the thyristor SCR1 as indicated by a dashed line 921. The half-wave rectified output voltage VO is supplied to the DC load 904 and the battery 903. On the other hand, when the voltage of the terminal 902-1 of the power generator is negative and the voltage of the terminal 902-2 is positive, the thyristor SCR2 is in the on-state as indicated by a dashed line 922, and the AC voltage VA generated by the power generator 902 is supplied to the lamp 905.

Here, a gate terminal of the thyristor SCR1 is controlled based on the voltage detected by the battery voltage detection circuit 906. Additionally, a gate terminal of the thyristor SCR2 is controlled based on the voltage detected by the lamp voltage detection circuit 912 (see, for example, Patent Document 1).

### CITATION LIST

### [Patent Document]

[Patent Document 1] Japanese Patent Unexamined Application, First Publication No. 2001-93680. Further, EP 1 087 643 A2 discloses a lamp lighting control circuit with two switches for supplying power to a lamp and for charging a battery.

### DISCLOSURE OF INVENTION

### Problems to be Solved by the Invention

In the related art disclosed in Patent Document 1, the lamp 905 is lighted using the AC voltage of the power generator 902, and therefore an effective value and a cycle of the AC voltage supplied to the lamp 905 vary. For this reason, the brightness of the lamp 905 flickers in accordance with the number of rotations until the number of rotations of the power generator 902 reaches the predetermined voltage. Additionally, the number of rotations until the number of rotations becomes the predetermined number of rotations, the brightness of the lamp 905 is low at the time of, for example, idling of a vehicle, thereby further causing flickering.

Additionally, in the related art disclosed in Patent Document 1, it has been impossible to light the lamp 905 when the power generator 902 is not rotated.

The present invention has been made in view of the above problems, an object of which is to provide a control circuit and a lamp lighting control method which enable a reduction in flicker of the brightness of a lamp even when the number of rotations of a power generator is low.

### Means for Solving the Problems

To solve the above object, a control circuit according to one embodiment of the present invention is configured to rectify an alternate voltage output from a power generator, thereby controlling charging of a battery and lighting of a lamp. The control circuit includes: a first switch coupled between an output unit of the power generator and the battery; a second switch coupled between the output of the power generator and the lamp; a third switch coupled between a connecting point of the first switch and the battery and a connecting point of the second switch and the lamp.

Additionally, regarding the control circuit, the first switch may be configured to supply a voltage of one phase of the alternate current voltage to the battery. The second switch may be configured to supply a voltage of the other phase of the alternate current voltage to the lamp. The third switch may be configured to supply a voltage of the battery to the lamp in a period in which the voltage of the one phase is output from the power generator.

Further, the control circuit may further include a switch control unit configured to perform control such that a period for supplying the voltage of the battery to the lamp is shortened as a cycle of the alternate current voltage is shorter.

Moreover, regarding the control circuit, the switch control unit may be configured to, when the current voltage is not output from the power generator, control the third switch to be in on-state, thereby supplying the voltage of the battery to the lamp.

Additionally, regarding the control circuit, the switch control unit may include: a triangular wave generation circuit configured to generate a triangular wave voltage having a constant peak voltage associated with each cycle of the alternate current voltage output from the power generator; a voltage converter circuit configured to generate a signal of an effective value voltage that is an output voltage applied to the load; a differential amplifier circuit configured to generate a first voltage signal for controlling a conductive state of the switch, based on a difference voltage between the effective value voltage applied to the load and a predetermined target voltage; and a comparison circuit configured to compare the first voltage signal and the triangular wave voltage, and control the conductive state of the switch.

Further, regarding the control circuit, the first switch and the first switch may be thyristor elements, and the third switch may be a field-effect transistor.

Moreover, a control method according to another embodiment of the present invention is a control method for a control circuit configured to rectify an alternate voltage output from a power generator, thereby controlling charging of a battery and lighting of a lamp. The control method includes: a step of supplying a voltage of one phase of the alternate current voltage to the battery through a first switch coupled between an output unit of the power generator and the battery; a step of supplying a voltage of the other phase of the alternate current voltage to the lamp through a second switch coupled between the output of the power generator and the lamp; a step of controlling a third switch coupled between a connecting point of the first switch and the battery and a connecting point of the second switch and the lamp to supply a voltage of the battery to the lamp in a period in which the voltage of the one phase is output from the power generator.

### Effects of the Invention

According to the control circuit and the control method of one embodiment of the present invention, a first switch coupled between an output unit of a power generator and a battery; a second switch coupled between the output of the power generator and the lamp; a third switch coupled between a connecting point of the first switch and the battery and a connecting point of the second switch and the lamp, are provided. Therefore, the voltage of the battery can be supplied. Further, based on a cycle of the AC voltage generated by the power generator, the switch control unit controls the third switch to be in the on-state during one of the phases of the AC voltage generated by the power generator, thereby supplying the voltage of the battery to the lamp. Consequently, it is possible to supply the voltage of the battery to the lamp even when the cycle of the voltage of the power generator is low, thereby reducing flicker of the brightness of the lamp.

### BRIEF DESCRIPTION OF THE DRAWINGS

FIG. 1 is a circuit diagram illustrating a light lighting and battery charging device according to a present embodiment.
FIG. 2 is a block diagram illustrating a switch control circuit according to the same embodiment.
FIG. 3A is a diagram illustrating a relative relationship between the triangular wave voltage VB and the difference voltage VD' (=VD) when a multiplication coefficient M, which is a gain of an amplifier circuit according to the same embodiment, is "1".
FIG. 3B is a diagram illustrating a relative relationship between the triangular wave voltage VB and the difference voltage VD' (=2×VD) when a multiplication coefficient M, which is the gain of the amplifier circuit according to the same embodiment, is "2".
FIG. 3C is a diagram illustrating a relative relationship between the triangular wave voltage VB/2 and the difference voltage VD' (=VD) when a multiplication coefficient M, which is the gain of the amplifier circuit according to the same embodiment, is "1".
FIG. 4 is an example of a waveform diagram in a case where a frequency of the AC voltage VA according to the same embodiment is low.
FIG. 5 is an example of a waveform diagram in a case where a frequency of the AC voltage VA according to the same embodiment is intermediate between the frequency in the case of FIG. 4 and the frequency in the case of FIG. 6.
FIG. 6 is an example of a waveform diagram in a case where a frequency of the AC voltage VA according to the same embodiment is higher than the frequency in the case of FIG. 5.
FIG. 7A is a waveform diagram illustrating a mechanism for a triangular wave generation circuit according to the same embodiment to generate a triangular wave (step of generating a sloped portion).
FIG. 7B is a waveform diagram illustrating a mechanism for the triangular wave generation circuit according to the same embodiment to generate a triangular wave (step of generating a sloped portion).
FIG. 8 is a waveform diagram illustrating the voltage of the lamp and the AC voltage of the power generator when the number of rotations is several hundred rotations.
FIG. 9 is a waveform diagram illustrating the voltage of the lamp and the AC voltage of the power generator when the number of rotations is approximately 1000 rotations.
FIG. 10 is a waveform diagram illustrating the voltage of the lamp and the AC voltage of the power generator when the number of rotations is approximately 2000 rotations.
FIG. 11 is a block diagram illustrating a first gate control circuit according to the same embodiment.
FIG. 12A is a diagram illustrating a waveform of each unit included in the control circuit 20 when the number of rotations of the power generator 10 according to the same embodiment is low.
FIG. 12B is a diagram illustrating a waveform of each unit included in the control circuit 20 when the number of rotations of the power generator 10 according to the same embodiment is high.
FIG. 13 is a circuit diagram illustrating a lamp lighting and battery charging device according to the related art.

### BEST MODE FOR CARRYING OUT THE INVENTION

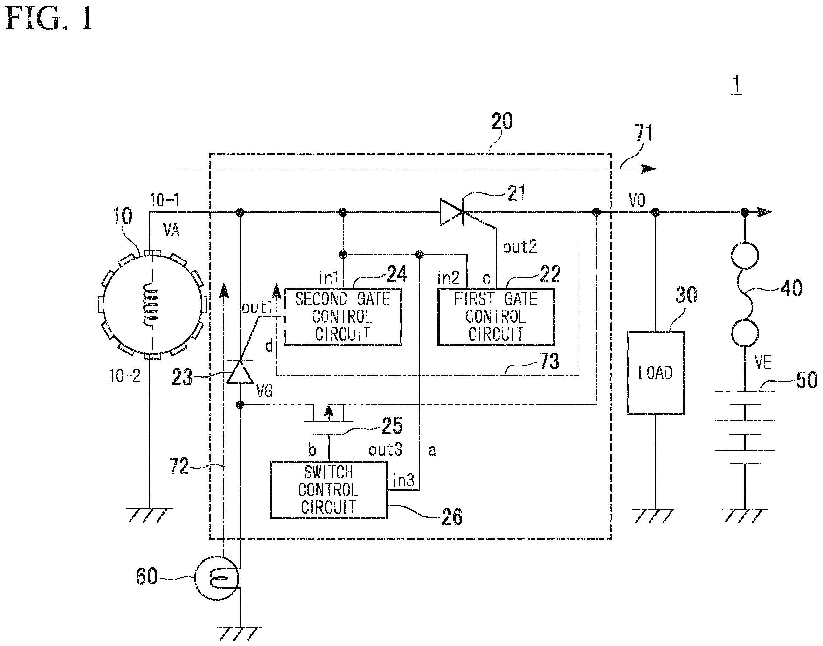

Hereinafter, embodiments of the present invention are explained with reference to drawings. FIG. 1 is a circuit diagram illustrating a lamp lighting and battery charging device 1 according to the present embodiment.

As shown in FIG. 1, the lamp lighting and battery charging device 1 includes: a power generator 10; a control circuit 20; and a battery 50. Additionally, the control circuit 20 is coupled to a lamp 60, a load 30, and a fuse 40. Further, the control circuit 20 includes: a first thyristor 21; a second thyristor 23; a first gate control circuit 22; a second gate control circuit 24; a switch 25; and a switch control circuit 26.

The power generator 10 is an alternate current generator, which rotates in conjunction with an engine of a vehicle or the like, thus generating alternate voltage. One end 10-1 of the power generator 10 is coupled to the control circuit 20, and the other end 10-2 thereof is grounded. The power generator 10 outputs the generated alternate voltage to the control circuit 20.

The lamp 60 is, for example, a headlight of a vehicle. One end of the lamp 60 is coupled to the control circuit 20, and the other end thereof is grounded.

The load 30 is one of various electric circuits of vehicles. One end of the load 30 is coupled to the control circuit 20, and the other end thereof is grounded.

The fuse 40 protects the battery 50. One end of the fuse 40 is coupled to the control circuit 20, and the other end thereof is coupled to a positive terminal of the battery 50.

The battery 50 is a charging battery. The positive terminal of the battery 50 is coupled to the other end of the fuse 40, and a negative terminal is grounded.

The gate terminal of the first thyristor 21 (first switch) is coupled to an output terminal out2 of the first gate control circuit 22. An anode terminal of the first thyristor 21 is coupled to the one end 10-1 of the power generator 10. Additionally, a cathode terminal of the first thyristor 21 is coupled to a source terminal and a back gate terminal of the switch 25, one end of the load 30, and one end of the fuse 40.

Thus, the first thyristor 21 half-wave rectifies the AC voltage VA output from the power generator 10 based on control of the first gate control circuit 22, and supplies the half-wave rectified output voltage VO to the load 30 and the fuse 40 as indicated by a dashed-dotted line 71.

The gate terminal of the second thyristor 23 (second switch) is coupled to an output terminal out1 of the second gate control circuit 24. A cathode terminal of the second thyristor 23 is coupled to the one end 10-1 of the power generator 10. Additionally, the anode terminate of the second thyristor 23 is coupled to a drain terminal of the switch 25 and one end of the lamp 60.

Thus, the second thyristor 23 half-wave rectifies the AC voltage VA output from the power generator 10, based on control of the second gate control circuit 24. Then, the second thyristor 23 supplies the half-wave rectified output voltage to the lamp 60, as indicated by the dashed-dotted line 72.

An input terminal in2 of the first gate control circuit 22 is coupled to one end 10-1 of the power generator 10. Additionally, an output terminal out2 of the first gate control circuit 22 is coupled to a gate terminal of the first thyristor 21.

Thus, the first gate control circuit 22 detects the AC current VA of the power generator 10 and controls an on-state and an off-state of the first thyristor 21 so as to prevent overcharge of the battery 50.

An input terminal in1 of the second gate control circuit 24 is coupled to the one end 10-1 of the power generator 10. Additionally, an output terminal out1 of the second gate control circuit 24 is coupled to a gate terminal of the second thyristor 23.

Thus, in a case where the second gate control circuit 24 detects that the effective voltage when current is applied to the lamp 60 is higher than or equal to a limit value (such as -12 [V]) (large on the negative side), the second gate control circuit 24 performs control to maintain the off-state of the second thyristor 23 in order to protect the lamp 60.

A source terminal and a back gate terminal of the switch 25 (third switch) are coupled to a connecting point of the cathode terminal of the first thyristor 21 and the one end of the fuse 40. The drain terminal of the switch 25 is coupled to a connecting point of the anode terminal of the second thyristor 23 and the one end of the lamp 60. Additionally, the gate terminal of the switch 25 is coupled to an output terminal out3 of the switch control circuit 26. Further, the switch 25 is, for example, an FFT (field-effect transistor).

Thus, based on control of the switch control circuit 26, the switch 25 supplies the voltage charged in the battery 50, to the lamp 60, as indicated by a dashed-dotted line 73.

An input terminal in3 of the switch control circuit 26 (switch control unit) is coupled to the one end 10-1 of the power generator 10. Additionally, the output terminal out3 of the switch control circuit 26 is coupled to the gate terminal of the switch 25.

Thus, the switch control circuit 26 detects the AC voltage VA of the power generator 10, and generates a signal for controlling the switch 25, based on the level of the AC voltage and the cycle which are detected, as will be explained later.

The switch control circuit 26 controls the switch 25 based on the generated signal for controlling the switch 25.

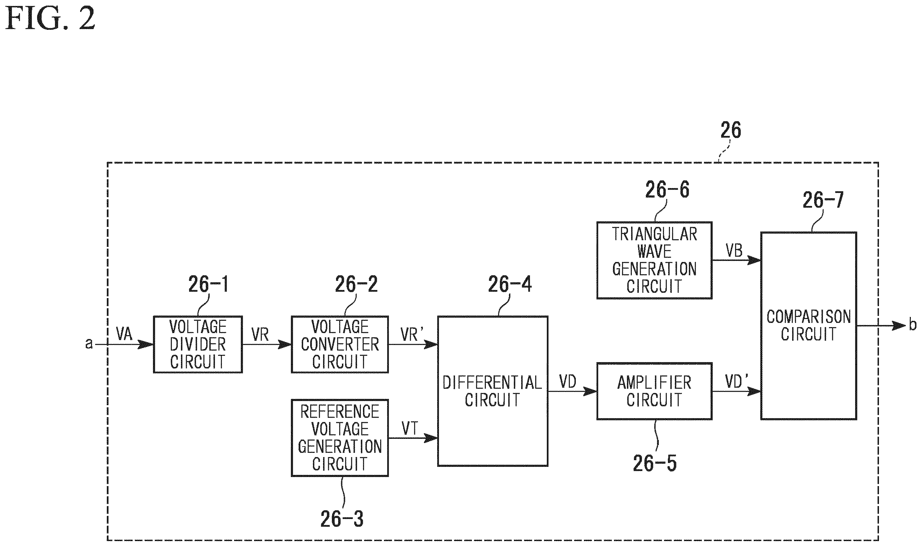

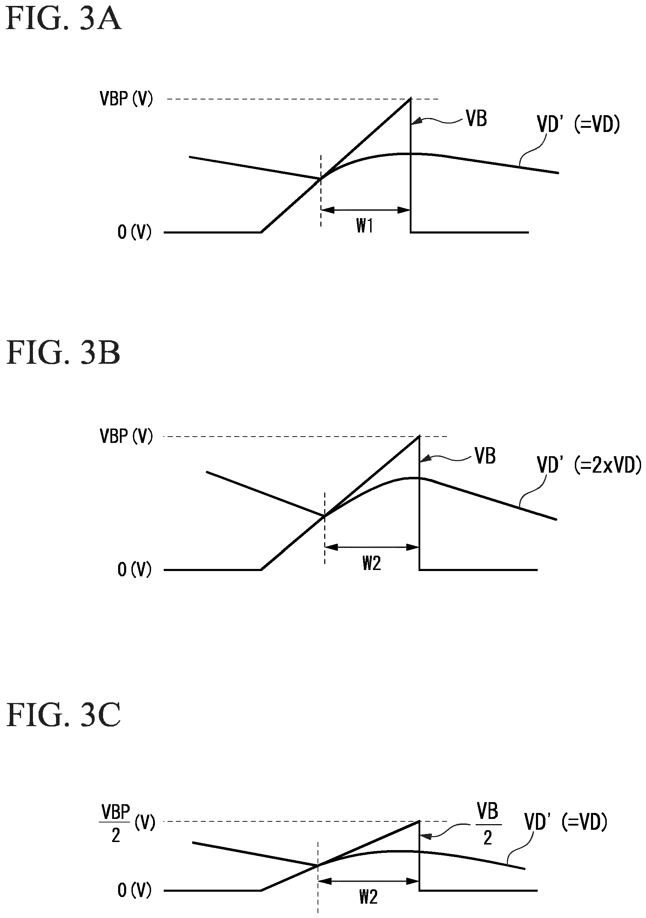

Next, the switch control circuit 26 is explained with reference to FIG. 2 and FIGS. 3A to 3C.

FIG. 2 is a block diagram illustrating the switch control circuit 26 according to the present embodiment.

As shown in FIG. 2, the switch control circuit 26 includes: a voltage divider circuit 26-1; a voltage converter circuit 26-2; a reference voltage generation circuit 26-3; a differential circuit 26-4; an amplifier circuit 26-5; a triangular wave generation circuit 26-6, and a comparison circuit 26-7.

The voltage divider circuit 26-1 voltage-divides the AC voltage VA output from the power generator 10, and outputs the divided voltage VR to the voltage converter circuit 26-2.

The voltage converter circuit 26-2 converts the voltage VR divided by the voltage divider circuit 26-1 into the voltage VR' representing the effective value thereof, and outputs the converted voltage VR' to one input terminal of the differential circuit 26-4. The voltage VR' is treated as the detected value of the voltage VG supplied to the lamp 60.

The reference voltage generation circuit 26-3 generates a target voltage VT for supplying the power to the load 30 and the battery 50, and outputs the generated target voltage VT to the other input terminal of the differential circuit 26-4.

The differential circuit 26-4 generates the difference voltage VD between the voltage VR' and the target voltage VD (=VR'-VT), and outputs the generated difference voltage VD to the amplifier circuit 26-5.

The amplifier circuit 26-5 outputs to one terminal of the comparison circuit 26-7, the difference voltage VD' obtained by amplifying the difference voltage VD.

The triangular wave generation circuit 26-6 generates the triangular wave voltage VB with the constant peak voltage in association with each cycle of the AC voltage VA output from the power generator 10, and outputs the generated triangular wave voltage VB to the other terminal of the comparison circuit 26-7.

The comparison circuit 26-7 compares the difference voltage VD' to the triangular wave voltage VB, and generates a control signal b that defines the conduction timing for the switch 25, based on a result of the comparison.

Next, the technical meaning of introducing the amplifier circuit 26-5 is explained with reference to FIGS. 3A to 3C.

FIGS. 3A to 3C are diagrams illustrating the relative relationship between the triangular wave voltage VB and the difference voltage VD' (=VD) when a multiplication coefficient M, which is the gain of the amplifier circuit 26-5, is "1" and "2". In FIG. 3A, in a case where the multiplication coefficient M is set to be "1", an interval W1 denotes a period in which the triangular wave voltage VB exceeds the difference voltage VD', that is, a period in which the switch 25 is controlled to be in the on-state. Additionally, FIG. 3B illustrates the relative relationship between the triangular wave voltage VB and the difference voltage VD' (=2×VD) in a case where the multiplication coefficient M is set to be "2". In a case where the multiplication coefficient M is set to be "2", thus amplifying the difference voltage VD to be double, as shown in FIG. 3B, the amount of variation in an interval W2 in association with the on-state of the switch 25 (the amount of variation in VD') becomes double compared to that in the interval W1 shown in FIG. 3A. Thus, the amount of response (sensitivity) of the control signal b becomes double the amount of the variation in the voltage VG supplied to the lamp 60.

This event is equivalent to an event that the peak voltage of the triangular wave voltage relatively becomes half (VB/2) the difference voltage VD' (=VD) at the time when the multiplication coefficient M is "1", which means that the control width W (which will be explained later) of the voltage VG supplied to the lamp 60 becomes half. Accordingly, the amplifier circuit 26-5 is introduced, and the difference voltage VD is amplified M times, thereby relatively reducing the control width W of the voltage VD supplied to the lamp 60 to 1/M. For this reason, it is possible to precisely control the voltage VG supplied to the lamp 60 to be the target voltage VT.

Here, a relationship such that the control width W is within a range from the target voltage VT to VT+(H/M) exists among the height H of the triangular wave voltage VB (=peak voltage VP), the multiplication coefficient M, the target voltage VT, and the control width W of the voltage VG supplied to the lamp 60. Accordingly, when the present control device is implemented, the height H and the multiplication coefficient M of the triangular wave voltage VB are adequately set according to the desired control width W and the target voltage VT so that the above relationship is satisfied.

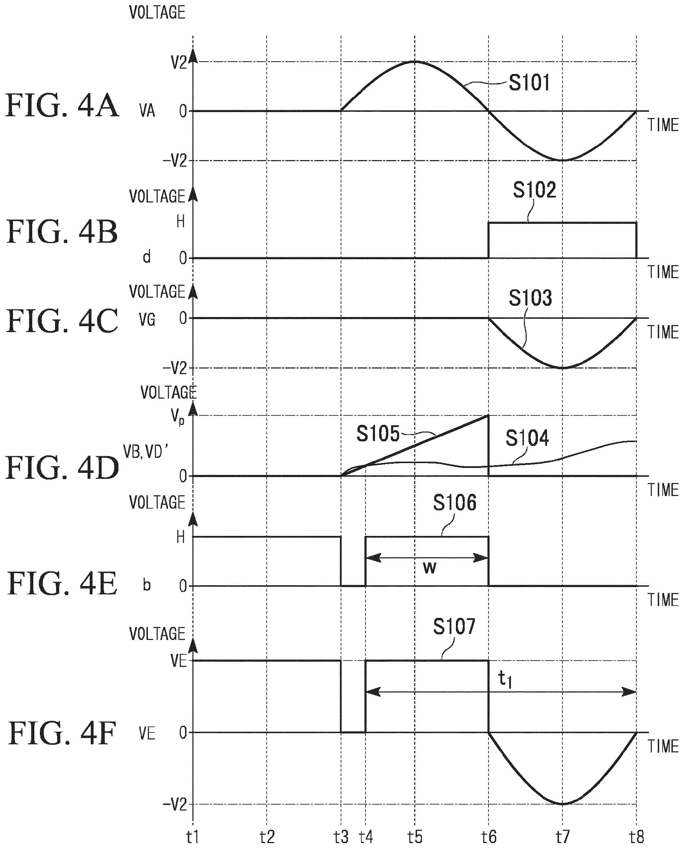

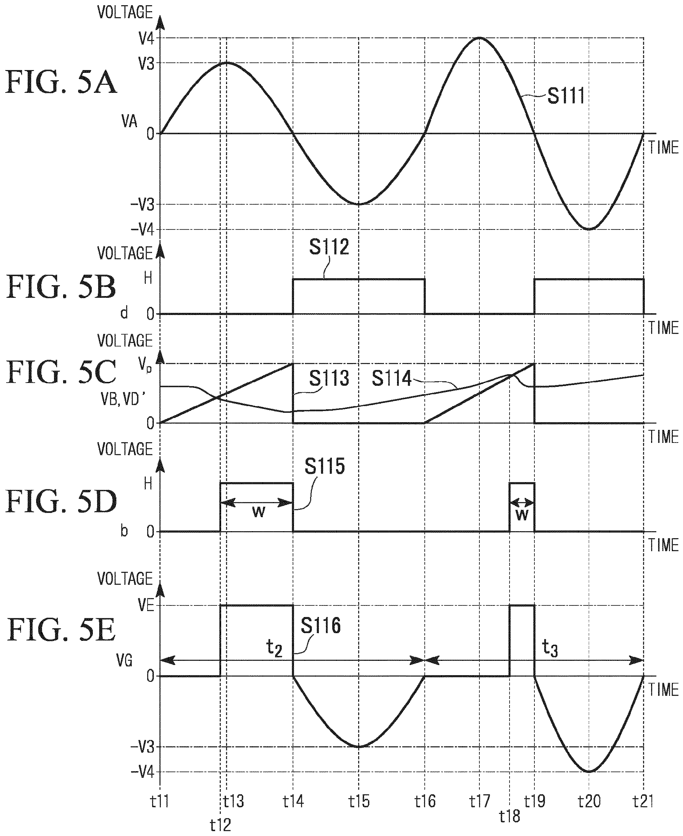

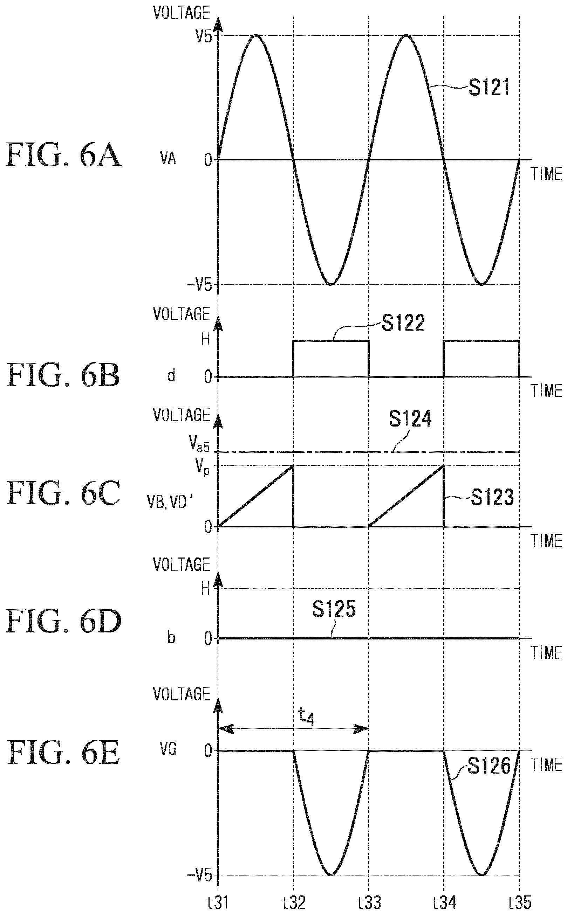

FIGS. 4 to 6 illustrate an example of waveforms of each unit of the control circuit 20 and the switch control circuit 26 according to the present embodiment. FIG. 4 illustrates an example of waveforms when a frequency of the AC voltage VA is low. FIG. 5 illustrates an example of waveforms when the frequency of the AC voltage VA is intermediate between the frequency in the case of FIG. 4 and the frequency in the case of FIG. 6. FIG. 6 illustrates an example of waveforms when the frequency of the AC voltage VA is higher than in the case of FIG. 5

In FIGS. 4 to 6, the horizontal axis denotes time, the vertical axis denotes the voltage level. For simplification of explanations and easy understanding, the waveforms shown in FIGS. 4 to 6 show a case where the load 30 is a light load or a resistor load (such as a lamp load). In other words, those waveforms show an example where waveforms obtained by the first thyristor 21 rectifying and phase-controlling the AC voltage VA, substantially as it is, are applied as the output voltage VO to the load 30. Additionally, in an actual case, the level and frequency of waveforms of the AC voltage VA gradually vary according to the number of rotations of the power generator 10. For simplification of explanations and easy understanding, however, only a case of the predetermined number of rotations is schematically shown.

FIG. 4(a) illustrates a waveform S101 of the AC voltage VA. Additionally, FIG. 4(b) illustrates a waveform S102 of the control signal d from the second gate control circuit 24. Further, FIG. 4(c) illustrates a waveform S103 after the second thyristor 23 performs half-wave rectification. FIG. 4(d) illustrates a waveform S105 of the output voltage of the triangular wave generation circuit 26-6 and a waveform S104 that is an output voltage of the amplifier circuit 26-5. Additionally, FIG. 4(e) illustrates a waveform S106 of the control signal b that is an output of the switch control circuit 26. Further, FIG. 4(f) illustrates a waveform S107 of the voltage VG supplied to the lamp 60.

Firstly, a period from time t1 to time t3 is explained. In the period from time t1 to time t3, the power generator 10 is in a state of not rotating.

As shown in FIG. 4(a), the power generator 10 does not rotate, and therefore the AC voltage VA is 0 [V].

As shown in FIG. 4(b), the power generator 10 does not rotate, and therefore the AC voltage VA is 0 [V]. Consequently, the second gate control signal d is low-level.

As shown in FIG. 4(c), the waveform after the second thyristor 23 performs half-wave rectification is also 0 [V].

As shown in FIG. 4(d), the output voltage of the triangular wave generation circuit 26-6 is 0 [V], and the output voltage of the amplifier circuit 26-5 is also 0.

As shown in FIG. 4(e), the control signal b from the switch control circuit 26 is a high-level (H) signal.

As shown in FIG. 4(f), the control signal b is high-level, and therefore the switch 25 is in the on-state. Consequently, the voltage VD supplied to the lamp 60 is the voltage VE of the battery 50.

Next, a period from time t3 to time t8 is explained. In the period from time t3 to time t8, the power generator 10 is in a state of rotating. Here, the number of rotations is 100 [rpm] or less.

As shown in FIG. 4(a), the maximum value of the AC voltage VA is V2 [V] on the positive voltage side in the period from time t3 to time t6, and is V2 [V] on the negative voltage side in the period from time t6 to time t8.

As shown in FIG. 4(b), the AC voltage VA is the positive voltage in the period from time t3 to time t6, and therefore the control signal d from the second gate control circuit 24 is a low-level signal. Additionally, the AC voltage VA is the negative voltage in the period from time t6 to time t8, and therefore the control signal from the second gate control circuit 24 is a high-level signal.

As shown in FIG. 4(c), the waveform after the second thyristor 23 performs half-wave rectification has a value V2 [V] of the peak voltage on the negative voltage side in the period from time t6 to time t8.

As shown in FIG. 4(d), the output voltage of the triangle wave generation circuit 26-6 corresponds to a cycle period of the positive-phase of the AC voltage VA, and has a triangular waveform such that the output voltage increases from 0 [V] at a constant slope starting from the point at which the AC voltage VA changes from the negative voltage to the positive voltage, and becomes 0 [V] at the point at which the AC voltage VA changes from the positive voltage to the negative voltage. The output voltage VD' of the amplifier circuit 26-5 is higher in voltage level than the triangular wave VB in the period from time t3 to time t4. Additionally, the output voltage VD' of the amplifier circuit 26-5 is lower in voltage level than the triangular wave voltage VB in the period from time t4 to time t6. For this reason, the width (control width explained in FIG. 6(a) to FIG. 6(e)) W of the control signal for supplying the power from the battery 50 to the lamp 60 corresponds to the period from time t3 to time t8.

As shown in FIG. 4(e), the output voltage VD' of the amplifier circuit 26-5 is higher in voltage level than the triangular wave VB in the period from time t3 to time t4, and therefore the control signal b from the switch control circuit 26 is a low-level control signal. Additionally, the output voltage VD' of the amplifier circuit 26-5 is lower in voltage level than the triangular wave VB in the period from time t4 to time t6, and therefore the control signal b from the switch control circuit 26 is a high-level control signal. Further, the triangular wave VB is not output in the period from time t6 to time t8, 0 [V] is input to the comparison circuit 26-7. For this reason, the output voltage VD' of the amplifier circuit 26-5 is higher than 0 [V], and therefore the control signal b from the switch control circuit 26 is a low-level control signal.

As shown in FIG. 4(f), the control signal b is a low-level signal in the period from time t3 to time t4, and therefore the switch 25 is in the off-state. For this reason, the voltage supplied to the lamp 60 is the output voltage obtained by half-wave rectifying the AC voltage VA, and therefore is 0 [V]. The control signal b is a high-level signal in the period from time t4 to time t6, and therefore the switch 25 is in the on-state. For this reason, the voltage VG supplied to the lamp 60 is the voltage VE of the battery 50. The control signal b is a low-level signal in the period from time t6 to time t8, and therefore the switch 25 is in the off-state. For this reason, the voltage VG supplied to the lamp 60 is the output voltage obtained by half-wave rectifying the AC voltage VA, and therefore has a value V2 [V] of the peak voltage on the negative voltage side.

As explained above, when the output voltage VA of the power generator 10 is 0 [V], the switch control circuit 26 performs control so as to supply the voltage of the battery 50 to the lamp 60.

Then, when the number of rotations of the power generator 10 is low, the switch control circuit 26 performs control so as to supply the voltage of the battery 50 to the lamp 60 in a period while the AC voltage VA is on the positive voltage side, and to supply to the lamp 60 in a period while the AC voltage VA is on the negative voltage side, the voltage on the negative voltage side output from the power generator 10, which is half-wave rectified by the second thyristor 23.

FIG. 5(a) illustrates a waveform S111 of the AC voltage VA. Additionally, FIG. 5(b) illustrates a waveform S112 of the control signal d of the second gate control circuit 24. Further, FIG. 5(c) illustrates a waveform S113 of the output voltage of the triangular wave generation circuit 26-6 and a waveform S114 of the output voltage of the amplifier circuit 26-5. FIG. 5(d) illustrates a waveform S115 of the control signal b that is an output of the switch control circuit 26. Additionally, FIG. 5(e) illustrates a waveform S116 of the voltage VG supplied to the lamp 60.

Firstly, a period from time t11 to time t16 is explained. The power generator 10 rotates at a low speed in the period from time t11 to time t16. Here, the number of rotations is, for example, several hundred [rpm].

As shown in FIG. 5(a), the maximum value of the AC voltage VA is V3 [V] on the positive voltage side in the period from time t11 to time t14, and is V3 [V] on the negative voltage side in the period from time t14 to time t16. Here, it is assumed that the voltage value V3 is higher than the voltage value V2 shown in FIG. 4(a), a cycle t₂=t16-t11 is shorter than a cycle t₁=t8-t4 shown in FIG. 4(a).

As shown in FIG. 5(b), in the period from time t11 to time t14, the AC voltage VA is the positive voltage, and therefore the control signal d of the second gate control circuit 24 is a low-level signal. Additionally, in the period from time t14 to t16, the AC voltage VA is the negative voltage, the control signal d of the second gate control 24 is a high-level signal.

As shown in FIG. 5(c), the output voltage of the triangular wave generation circuit 26-6 corresponds to the cycle period of the positive phase of the AC voltage VA, and has a triangular waveform that increases from 0 [V] at a constant slope, starting from the point at which the AC voltage VA changes from the negative voltage to the positive voltage, and becomes 0 [V] at the point at which the AC voltage VA changes from the positive voltage to the negative voltage. The output voltage VD' of the amplifier circuit 26-5 is higher in voltage level than the triangular wave VB in the period from time t11 to t12. Additionally, the output voltage VD' of the amplifier circuit 26-5 is higher in voltage level than 0 [V] in the period from time t14 to t16. Further, the output voltage VD' of the amplifier circuit 26-5 is lower in voltage level than the triangular wave voltage VB in the period from time t12 to time t14.

As shown in FIG. 5(d), the output voltage VD' of the amplifier circuit 26-5 is higher in voltage level than the triangular wave VB, and therefore the control signal b of the switch control circuit 26 is a low-level control signal. Additionally, in the period from time t12 to time t14, the output voltage VD' of the amplifier circuit 26-5 is lower in voltage level than the triangular wave VB, and therefore the control signal b of the switch control circuit 26 is a high-level control signal. Further, the triangular wave VB is not output in the period from time t14 to t16, and therefore 0 [V] is input to the comparison circuit 26-7. For this reason, the output voltage VD' of the amplifier circuit 26-5 is higher in voltage level than 0 [V], and therefore the control signal b of the switch control circuit 26 is a low-level control signal. For this reason, the width W of the control signal for supplying the voltage of the battery 50 to the lamp 60 corresponds to the period from time t12 to time t14.

As shown in FIG. 5(e), the control signal b is a low-level signal in the period from time t11 to time t12, and therefore the switch 25 is in the off-state. For this reason, the voltage supplied to the lamp 60 is the output voltage obtained by half-wave rectifying the AC voltage VA, and therefore is 0 [V]. In the period from time t12 to time t14, the control signal b is a high-level signal, and therefore the switch 25 is in the on-state. At this time, the voltage VG supplied to the lamp 60 is the voltage VE of the battery 50. In the period from t14 to t16, the control signal b is a low-level signal, and therefore the switch 25 is in the off-state. At this time, the voltage VG supplied to the lamp 60 is the output voltage obtained by half-wave rectifying the AC voltage VA, and therefore has a value V3 [V] of the peak voltage on the negative voltage side. Further, the period in which the battery voltage VE is supplied to the lamp 60 is the period from time t12 to time t14, and thus is shorter than the period from time t4 to time t6 shown in FIG. 4(f).

Next, a period from time t16 to time t21 is explained above. In the period from time t16 to time t21, the power generator 10 is in the state of rotating at higher speed than that in the period from time t11 to time t16. Here, the number of rotations is, for example, 1000 [rpm].

As shown in FIG. 5(a), the maximum value of the AC voltage VA is V4 [V] on the positive voltage side in the period from time t16 to time t19, and is V4 [V] on the negative voltage side in the period from time t19 to time t21. Here, it is assumed that the voltage value V4 is higher than the voltage value V3, and a cycle t₃=t21-t16 is shorter than the cycle t₂=t16-t11.

As shown in FIG. 5(b), in the period from time t16 to time t19, the AC voltage VA is the positive voltage, and therefore the control signal d from the second gate control circuit 24 is a low-level signal. Additionally, in the period from time t19 to time t21, the AC voltage VA is the negative voltage, and therefore the control signal d from the second gate control circuit 24 is a high-level signal.

As shown in FIG. 5(c), the output voltage of the triangular wave generation circuit 26-6 corresponds to the cycle of the positive phase of the AC voltage VA, and has a triangular waveform that increases from 0 [V] at a constant slope, starting from the point at which the AC voltage VA changes from the negative voltage to the positive voltage, and becomes 0 [V] at the point at which the AC voltage VA changes from the positive voltage to the negative voltage. The output voltage VD' of the amplifier circuit 26-5 is higher in voltage level than the triangular waveform VB in the period from time t16 to time t18. Additionally, the output voltage VD' of the amplifier circuit 26-5 is higher in voltage level than 0 [V] in the period from time t19 to time t21. Further, the output voltage VD' of the amplifier circuit 26-5 is lower in voltage level than the triangular waveform VB in the period from time t18 to time t19.

As shown in FIG. 5(d), the output voltage VD' of the amplifier circuit 26-5 is higher in voltage level than the triangular waveform VB in the period from time t16 to time t18, and therefore the control signal b from the switch control circuit 26 is a low-level signal. Additionally, the output voltage VD' of the amplifier circuit 26-5 is lower in voltage level than the triangular waveform VB in the period from time t18 to time t19, and therefore the control signal b of the switch control circuit 26 is a high-level signal. Further, the triangular wave VB is not output in the period from time t19 to time t21, and 0 [V] is input to the comparison circuit 26-7. At this time, the output voltage VD' of the amplifier circuit 26-5 is higher in voltage level than 0 [V], and therefore the control signal b from the switch control circuit 26 is a low-level control signal.

As shown in FIG. 5(e), the control signal b is a low-level signal in the period from time t16 to time t18, and therefore the switch 25 is in the off-state. At this time, the voltage VG supplied to the lamp 60 is the output voltage obtained by half-wave rectifying the AC voltage VA, and therefore is 0 [V]. In the period from time t18 to time t19, the control signal b is a high-level signal, and therefore the switch 25 is in the on-state. At this time, the voltage VG supplied to the lamp 60 is the voltage VE of the battery 50. In the period from t19 to t21, the control signal b is a low-level signal, and therefore the switch 25 is in the off-state. At this time, the voltage VG supplied to the lamp 60 is the output voltage obtained by half-wave rectifying the AC voltage VA, and therefore is a value V4 [V] of the peak voltage on the negative voltage side. The width W of the control signal for supplying the voltage of the battery 50 to the lamp 60 corresponds to the period from time t18 to time t19.

As explained above, when the AC voltage VA is on the positive voltage side, the switch control circuit 26 controls the switch 25 such that as the voltage level of the AC voltage VA increases or the cycle of the AC voltage VA decreases, the period in which the voltage VE of the battery 50 is supplied to the lamp 60 is shorter. In other words, the period from time t18 to time t19 for supplying the voltage of the battery 50 when the cycle of the AC voltage VA is t3 is shorter than the period from time t12 to time 14 for supplying the voltage of the battery 50 when the cycle of the AC voltage VA is t2. Additionally, in the period in which the AC voltage VA is on the negative voltage side, the switch control circuit 26 controls the switch 25 to be in the off-state, thus supplying to the lamp 60, the voltage on the negative voltage side from the power generator 10, which is half-wave rectified by the second thyristor 23.

FIG. 6(a) illustrates a waveform S121 of the AC voltage VA. Additionally, FIG. 6(b) illustrates a waveform S122 of the control signal d from the second gate control circuit 24. Further, FIG. 6(c) illustrates a waveform S123 of the output voltage of the triangular wave generation circuit 26-6 and a waveform S124 of the output voltage of the amplifier circuit 26-5. FIG. 6(d) illustrates a waveform S125 of the control signal b that is an output of the switch control circuit 26. Additionally, FIG. 6(e) illustrates a waveform S126 of the voltage VG supplied to the lamp 60.

Here, the number of rotations is, for example, 2000 [rpm].

As shown in FIG. 6(a), the maximum value of the AC voltage VA is V5 [V] on the positive voltage side in the period from time t31 to time t33 and the period from time t33 to time t34, and is V5 [V] on the negative voltage side in the period from time t33 to time t35 and the period from time t34 to time t35. Here, it is assumed that the voltage value V5 is higher than the voltage value V4 shown in FIG. 5(a), a cycle t₄=t33-t31 is shorter than a cycle t₃=t21-16 shown in FIG. 5(a).

As shown in FIG. 6(b), in the period from time t31 to time t32 and the period from time t33 to time t34, the AC voltage VA is the positive voltage, and therefore the control signal d from the second gate control circuit 24 is a low-level signal. Additionally, in the period from time t32 to time t33 and the period from time t34 to time t35, the AC voltage VA is the negative voltage, the control signal d from the second gate control 24 is a high-level signal.

As shown in FIG. 6(c), the output voltage of the triangular wave generation circuit 26-6 corresponds to the cycle of the positive phase of the AC voltage VA, and has a triangular waveform that increases from 0 [V] at a constant slope, starting from the point at which the AC voltage VA changes from the negative voltage to the positive voltage, and becomes 0 [V] at the point at which the AC voltage VA changes from the positive voltage to the negative voltage. The output voltage VD' of the amplifier circuit 26-5 is higher in voltage level than the triangular waveform VB in the period from time t31 to time t32 and the period from time t33 to time t34. Additionally, the output voltage VD' from the amplifier circuit 26-5 is higher in voltage level than 0 [V] in the period from time t32 to time t33 and the period from time t34 to t35.

As shown in FIG. 6(d), the output voltage VD' of the amplifier circuit 26-5 is higher in voltage level than the triangular waveform VB in the period from time t31 to time t32 and the period from time t33 to time t34, and therefore the control signal b from the switch control circuit 26 is a low-level signal. Additionally, the output voltage VD' of the amplifier circuit 26-5 is higher than 0 [V] in the period from time t32 to time t33 and the period from time t34 to time t35, and therefore the control signal b of the switch control circuit 26 is a low-level control signal.

As shown in FIG. 6(e), the control signal b is a low-level signal in the period from time t31 to time t32 and the period from time t33 to time t34, and therefore the switch 25 is in the off-state. At this time, the voltage VG supplied to the lamp 60 is the output voltage obtained by half-wave rectifying the AC voltage VA, and therefore is 0 [V]. In the period from time t32 to time t33 and the period from time t34 to time t35, the control signal b is a low-level signal, and therefore the switch 25 is in the off-state. At this time, the voltage VG supplied to the lamp 60 is the output voltage obtained by half-wave rectifying the AC voltage VA, and therefore has a value V5 [V] of the peak voltage at the negative voltage side.

As explained above, when the voltage value on the positive voltage side of the AC voltage VA is higher than or equal to the predetermined voltage, the switch control circuit 26 performs control the switch 25 so as not to supply the voltage VE of the battery 50. Additionally, in the period in which the AC voltage VA is on the negative voltage side, the switch control circuit 26 controls the switch 25 to be in the off-state and performs control so as to supply to the lamp 60, the voltage on the negative voltage side from the power generator 10, which has been half-wave rectified by the second thyristor 23.

Here, the reference voltage value of the reference voltage generation circuit 26-3 and the gain of the amplifier circuit 26-5 may be set previously at the time of design by experiments and the like, based on the number of rotations of the power generator 10, in accordance with the level of the battery voltage to be added and the level of the AC voltage of the power generator 10.

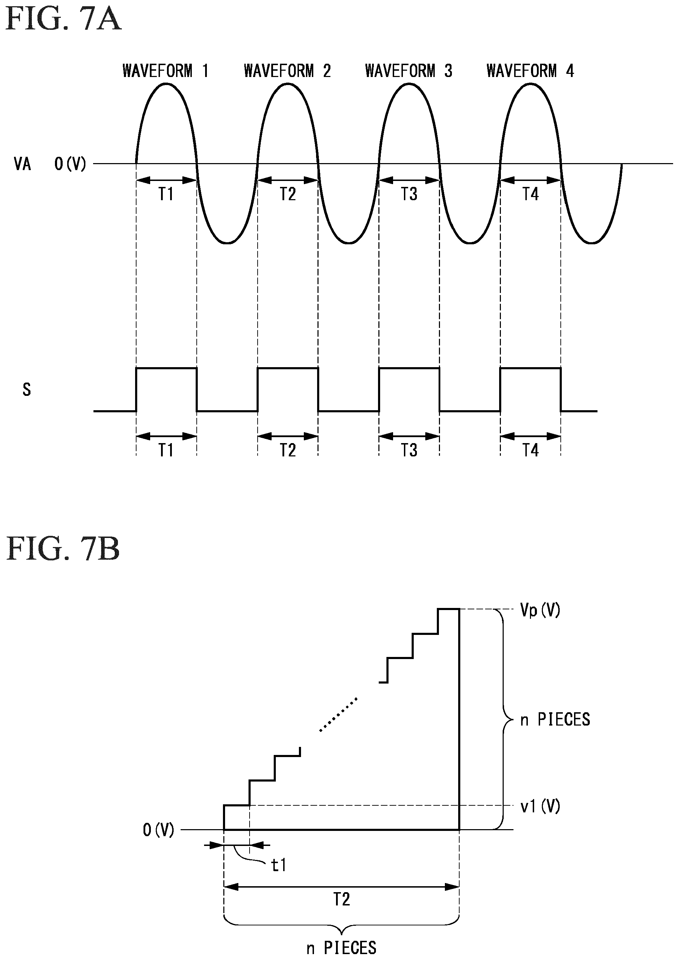

Next, the mechanism for the triangular wave generation circuit 26-6 to generate the triangular wave voltage VB is explained with reference to FIGS. 7A and 7B. FIGS. 7A and 7B are waveform diagrams illustrating the mechanism for the triangular wave generation circuit of the present embodiment to generate triangular waves (step of generating a sloped portion).

FIG. 7A is a waveform diagram illustrating the AC current VA and a rectangular wave S. Additionally, FIG. 7B is a diagram illustrating generation of the triangular wave voltage VB.

Generally, the frequency of the AC voltage output from the power generator 10 does not vary significantly. For this reason, the waveform in the current cycle can be considered to be substantially the same as the waveform in the previous cycle. For example, if a waveform 2 is assumed to be the waveform in the current cycle in the case of FIG. 7A, the half cycle T2 of the waveform 2 is substantially the same as the half cycle T1 of the waveform 1 in the previous cycle.

With use of the aforementioned characteristics, the triangular wave voltage VB is generated by the following steps.

(Step 1) As shown in FIG. 7A, in the cycle of the waveform 1, the rectangular wave S is generated from the AC voltage VA output from the power generator 10. The half cycle of the rectangular wave S corresponding to the waveform 1 is equal to the half cycle T1 of the AC voltage VA in the cycle of the waveform 1.

(Step 2) Then, a period of the half cycle T1 of the rectangular wave S is counted.

(Step 3) Then, the counted value of the period of the half cycle T1 is divided by a predetermined resolution n, thereby obtaining the period t1 (=T1/n). Here, the resolution n denotes the amount that defines the degree of smoothness of the slope of the triangular wave voltage VB. As the resolution n increases, the slope of the triangular wave voltage VB is smoother.

(Step 4) Then, the peak voltage Vp of the triangular wave voltage VB is divided by the predetermined resolution n, thereby obtaining the voltage v1 (=Vp/n).

(Step 5) Then, as shown in FIG. 7B, the triangular wave voltage VB is increased by the above voltage v1 at the rising edge of the waveform 2 in the next cycle (at the timing of initiating counting T2), and the increased triangular wave voltage VB is maintained for the above period t1.

(Step 6) In the cycle of the same waveform 2, the triangular wave voltage VB is further increased by the above voltage v1 at the timing at which the above period t1 has elapsed. These steps are repeated n times in total. Thus, the step-like waveform as shown in FIG. 7B can be obtained, and the step-like waveform corresponding to the sloped portion of the triangular wave voltage associated with the cycle of the waveform 2 can be obtained. As the value of the resolution n is increased, the step-like waveform is smoother, and thus a more favorable triangular wave can be obtained.

By the above steps, the voltage waveform with the constant peak voltage Vp, which is the triangular wave voltage corresponding to each cycle of the AC voltage VA, is generated using the waveform of the AC voltage VA in the previous cycle.

The triangular wave generation circuit 26-6 using the aforementioned mechanism of generating the triangular wave voltage is used for generating the triangular wave voltage that controls the conduction timing of the switch 25 in the control device 20. For example, the triangular wave generation circuit 26-6 may include: a counter unit; a divider unit; and a waveform generation unit. Here, the counter unit is configured to count a period of the half cycle of the AC voltage waveform in the first cycle output from the power generator 10 (such as the period T1 in the cycle of the waveform 1 shown in FIG. 7A). The divider unit is configured to divide the value counted by the counter unit, by the resolution n (predetermined value). The waveform generation unit is configured to generate a step-like voltage waveform that increases by the predetermined voltage v1 every time the period t1 elapses in the second cycle subsequent to the first cycle (such as the cycle of the waveform 2 shown in FIG. 7A), the period t1 being indicated by a result of the division in the first cycle performed by the divider unit. The step-like voltage waveform is output as a waveform of the above triangular wave voltage.

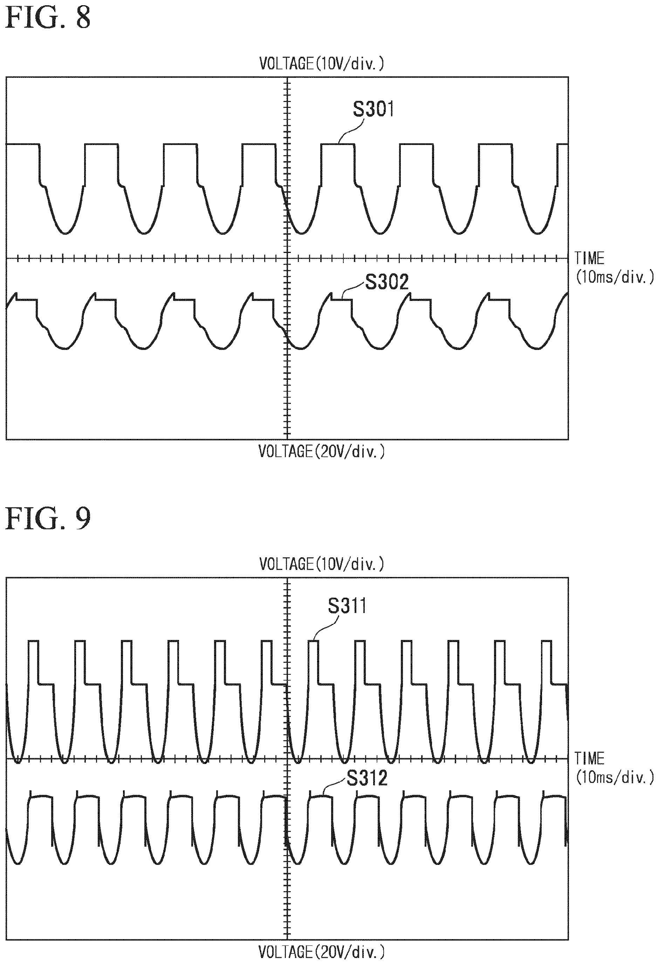

FIGS. 8 to 10 are actually-measured waveform diagrams illustrating the output voltage of the power generator 10 and a voltage waveform supplied to the lamp 60 in a case where the lamp 60 is lighted by the control circuit of the present embodiment.

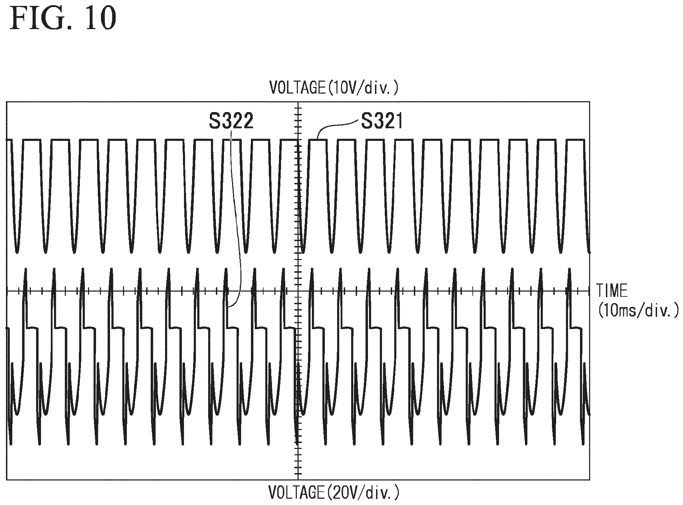

FIG. 8 is a waveform diagram illustrating the voltage of the lamp and the AC voltage of the power generator when the number of rotations is several hundred rotations according to the present embodiment. FIG. 9 is a waveform diagram illustrating the voltage of the lamp and the AC voltage of the power generator when the number of rotations is approximately 1000 rotations according to the present embodiment. FIG. 10 is a waveform diagram illustrating the voltage of the lamp and the AC voltage of the power generator when the number of rotations is approximately 2000 rotations according to the present embodiment.

In FIGS. 8 to 10, the horizontal axis denotes time, and the vertical axis denotes the voltage level. Additionally, in FIGS. 8 to 10, the waveforms S301, 311, and 321 denote voltage waveforms of the lamp 60. The waveforms 302, 312, and 322 denote waveforms of the AC voltage of the power generator 10. Here, in FIGS. 8 to 10, the display range of the voltage waveform of the lamp 60 is half the display range of the AC voltage of the power generator 10.

As shown in FIG. 8, in a case where the number of rotations is several hundred rotations, the voltage waveform 301 supplied to the lamp 60 is provided with the battery voltage while the AC voltage is the positive voltage, as explained with reference to FIGS. 4(a) to 4(f). Here, the reason that the AC waveform 302 of the power generator 10 has the waveform such that the battery voltage is supplied while the AC voltage is the positive voltage, which differs from the cases of FIGS. 4(a) to 4(f), is the effect of the load, such as the battery.

As shown in FIG. 9, in a case where the number of rotations is approximately 1000 rotations, regarding the voltage waveform 311 supplied to the lamp 60, the width of the battery voltage is adjusted while the AC voltage is the positive voltage, as explained with reference to FIGS. 5(a) to 5(f). Here, the reason that the AC waveform 312 of the power generator 10 has the waveform such that the battery voltage is supplied while the AC voltage is the positive voltage, which differs from the cases of FIGS. 5(a) to 5(f), is the effect of the load, such as the battery.

As shown in FIG. 10, in a case where the number of rotations is approximately 2000 rotations, regarding the voltage waveform 321 supplied to the lamp 60, the battery voltage is not supplied while the AC voltage is the positive voltage, and the battery voltage is supplied only while the AC voltage is the negative voltage, as explained with reference to FIGS. 6(a) to 6(e). Here, the reason that the AC waveform 322 of the power generator 10 has the waveform such that the pulse-like waveform is supplied while the AC voltage is the positive voltage, which differs from the cases of FIGS. 6(a) to 6(e), is the effect of the load, such as the battery.

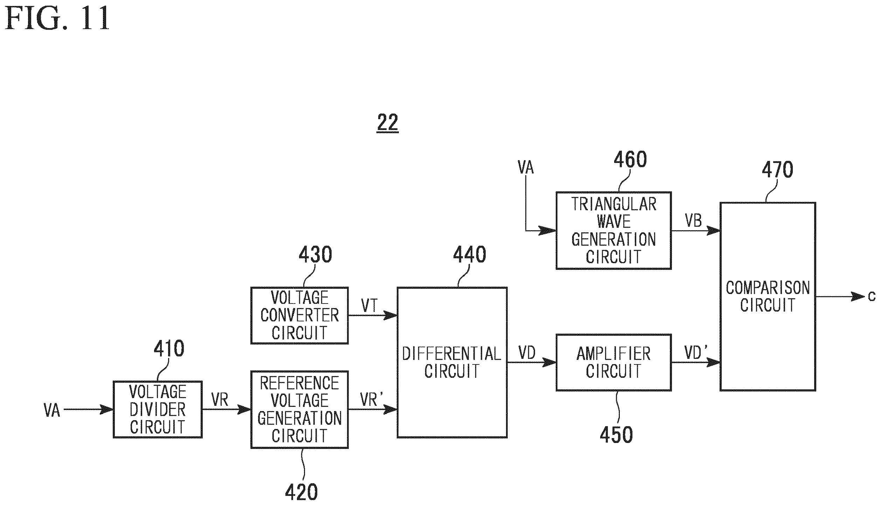

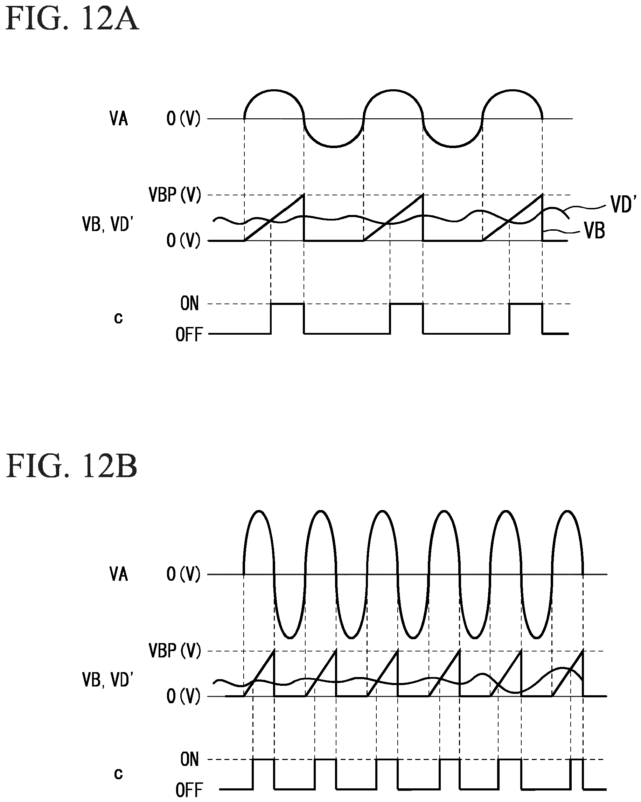

Next, the outline of operation of the first gate control circuit 22 is explained with reference to FIGS. 11, 12A, and 12B. FIG. 11 is a block diagram illustrating the first gate control circuit according to the present embodiment.

As shown in FIG. 11, the first gate control circuit 22 includes: a divider circuit 410; a voltage converter circuit 420; a reference voltage generation circuit 430; a differential circuit 440; an amplifier circuit 450; a triangular waveform generation circuit 460; and a comparison circuit 470.

The divider circuit 410 divides the AC voltage VA output from the power generator 10, and outputs the divided voltage VR to the voltage converter circuit 420.

The voltage converter circuit 420 converts the voltage VR divided by the voltage divider circuit 410 into the voltage VR' representing the effective value thereof, and outputs the converted voltage VR' to one input terminal of the differential circuit 440. The voltage VR' is treated as the detected value of the output voltage VO.

The reference voltage generation circuit 430 generates the target voltage VT for supplying the power to the load 30 and the battery 50, and outputs the generated target voltage VT to the other input terminal of the differential circuit 440.

The differential circuit 440 generates the difference voltage VD between the voltage VR' and the target voltage VT (=VR'-VT), and outputs the generated difference voltage to the amplifier circuit 450.

The amplifier circuit 450 outputs the difference voltage VD' obtained by amplifying the difference voltage VD, to one terminal of the comparison circuit 470.

The triangular wave generation circuit 460 generates the triangular wave voltage VB with the constant peak voltage corresponding to each cycle of the AC voltage VA output from the power generator 10, and outputs the generated triangular wave voltage VB to the other terminal of the comparison circuit 470. A method of generating the triangular wave is similar to that used by the triangular wave generation circuit 26-6 of the switch control circuit 26.

The comparison circuit 470 compares the difference voltage VD' and the triangular wave voltage VB, and generates, based on a result of the comparison, a control signal c that defines the conduction timing of the first thyristor 21.

Next, normal time (stationary time) operation of the control circuit 1 when the switch control circuit 26 does not operate is explained with reference to FIGS. 12A and 12B. Explanations are given here with respect to a case where only the difference voltage VD' and the triangular wave voltage VB are compared by the comparison circuit 470.

FIGS. 12A and 12B are diagrams illustrating a waveform of each unit of the control circuit when the switch control circuit does not operate. FIG. 12A is a diagram illustrating a waveform of each unit of the control circuit 20 when the number of rotations of the power generator 10 is low. FIG. 12B is a diagram illustrating a waveform of each unit of the control circuit 20 when the number of rotations of the power generator 10 is high. In FIGS. 12A and 12B, the horizontal axis denotes time, and the vertical axis denotes the AC voltage VA, the triangular wave voltage VB, the difference voltage VD', and the control signal c, which are arranged in the vertical axis.

The difference circuit 440 in the first gate control circuit 22 receives the target voltage VT generated by the reference voltage generation circuit 430 and the voltage VR' output from the voltage converter circuit 420, and generates the difference voltage VD therebetween. The amplifier circuit 450 amplifies, by M times, the difference voltage VD and supplies the voltage VD' (=M×VD) to the comparison circuit 470.

The comparison circuit 470 compares the difference voltage VD' and the triangular wave circuit VB, and generates, based on a result of the comparison, the control signal c that defines the conduction timing of the first thyristor 21. Then, the comparison circuit 470 sets the control signal c to be a high-level signal in the interval in which the triangular wave circuit VB exceeds the difference voltage VD' (VB>VD'), and sets the control signal c to be a low-level signal in the interval in which the triangular wave circuit VB is lower than the difference voltage VD' (VB<VD'). Thus, the comparison circuit 470 supplies the control signal c to the gate electrode of the first thyristor 21. In other words, the first thyristor 21 is controlled to be in the on-state in the interval in which the triangular wave circuit VB exceeds the difference voltage VD' (VB>VD'), and is controlled to be in the off-state in other intervals. Thus, the gate control circuit 22 controls the conductive state of the first thyristor 21 based on the triangular wave voltage VB generated by the triangular wave generation circuit 460 and the difference voltage VD' output from the amplifier circuit 450.

Here, the interval in which the first thyristor 21 is in the on-state, that is, the interval in which the triangular wave voltage VB exceeds the difference voltage VD', depends on the level of the difference voltage VD'. The level of the difference voltage VD' depends on the output voltage VO with respect to the target voltage VT. Accordingly, as the output voltage VO increases, the level of the voltage VD' increases, the interval in which the triangular wave voltage VB exceeds the difference voltage VD' decreases, and thus the interval in which the thyristor 21 is in the on-state decreases. Consequently, the output voltage VO is lowered toward the target voltage VT.

Conversely, as the output voltage VO decreases, the level of the voltage VD' decreases. Consequently, the interval in which the triangular wave voltage VB exceeds the difference voltage VD' increases, and the interval in which the first thyristor 21 is in the on-state increases. Consequently, the output voltage VO is heighten toward the target voltage VT. Thus, the conduction period of the first thyristor 21 is controlled so that the output voltage VO stably converges on the target voltage VT in each cycle of the AC voltage of the power generator 10.

The case where the number of rotations of the power generator 10 is low has been explained above. In a case where the number of rotations of the power generator 10 is high, however, the amplitude and the frequency of the AC voltage VA output from the power generator 10 increase, as shown in FIG. 12B. For this reason, the rate of increase in the triangular wave voltage VB increases. The other respects are similar to the case where the number of rotations of the power generator 10 is low, as shown in FIG. 12A. Thus, the gate control of the first thyristor 21 is performed so that the effective value of the output voltage VO stably converges on the target voltage VT.

A configuration and operation of the second gate control circuit 24 are similar to those of the first gate control circuit 22.

As explained with reference to FIGS. 6(a) to 6(e), when the cycle of the power generator 10 is higher than the predetermined cycle, the switch control circuit 26 performs control so as not to supply the voltage of the battery 50 in the period while the AC voltage VA is on the positive voltage side. Then, when the cycle of the power generator 10 is higher than the predetermined cycle, the first gate control circuit 22 and the second gate control circuit 24 control the first thyristor 21 and the second thyristor 23 to perform phase control of the voltage, thereby preventing a variation of the effective value of the voltage supplied to the lamp 60.

Additionally, the switch control circuit 26 may monitor the voltage supplied to the battery 50 through the first thyristor 21, thus detecting that the battery 50 is removed. In this case, the switch control circuit 26 detects that the output voltage VO significantly increases, thereby detecting that the battery 50 is removed. The switch control circuit 26 determines, for example, whether or not the voltage level of the AC voltage VA varies in a predetermined period by the voltage that is greater than or equal to a predetermined voltage. If it is determined that the voltage level of the AC voltage VA varies in the predetermined period by the voltage that is greater than or equal to the predetermined voltage, the switch control circuit 26 determines that the battery 50 is removed.

Then, the switch control circuit 26 controls the switch 25 to be in the on-state after detecting that the battery 50 is removed. Thus, the switch control circuit 26 forcibly supplies to the lamp 60, the significant peak of the voltage caused by the battery 50 being removed, thereby preventing the significant peak of the voltage from being supplied to the load 30.

As explained above, when the power generator 10 does not rotate, the switch control circuit 26 controls the switch 25 to be in the on-state so that the battery voltage VE is supplied to the lamp 60. Therefore, it is possible to light the lamp 60 even when the power generator 10 does not rotate. Then, when the power generator 10 rotates, the switch control circuit 26 controls the switch 25 so as to supply the voltage of the battery to the lamp 60 based on the number of rotations of the power generator 10, in the period while the generated AC voltage VA is on the positive voltage side. Additionally, the switch control circuit 26 controls the switch 25 to be in the off-state in the period while the AC voltage VA is on the negative voltage side. Thus, the voltage of the battery with the variable width is supplied while the AC voltage generated by the power generator 10 is on the positive voltage side. Accordingly, it is possible to reduce flicker of the brightness of the lamp 60 which depends on the number of rotations of the power generator 10.

Further, the lamp 60 is lighted by the battery 50 only in the period associated with the cycle of the AC voltage, which is in the period while the AC voltage is on the positive voltage side. The lamp 60 is lighted by the AC voltage in the period while the AC voltage is on the negative voltage side. If the lamp 60 is assumed to be coupled on the output side of the control circuit 20, it is possible to light the lamp 60 even when the power generator 10 does not rotate, but the power consumption of the battery is large. According to the present embodiment, on the other hand, the voltage of the battery 50 is supplied via the switch 25 to the lamp 60 in accordance with the cycle, in the period while the AC voltage is on the positive voltage side. Therefore, another effect of reducing the power consumption of the battery 50 caused by the lamp 60 is achieved, compared to the case where the lamp 60 is lighted only by the battery 50.

Although the embodiments of the present invention have been explained above, the present invention is not limited to the above embodiments, and various modifications may be made without departing from the scope of the present invention.

For example, although the case where the control circuit is used in a vehicle has been explained in the present embodiment, the control circuit may be used in a device other than the vehicle as long as the device performs lighting of a lamp and charging of a battery.

Additionally, explanations have been given in the present embodiment with respect to the case where only the positive phase element of the AC power output from the power generator 10 is supplied to the load via the first thyristor 21, only the negative phase element of the AC power is supplied to the lamp 60 via the second thyristor 23, and the output of the power generator 10 is half-wave rectified. However, the configuration is not limited thereto, and may be such that the negative phase element of the AC power output from the power generator 10 is also be half-wave rectified, thereby performing full-wave rectification. Alternatively, the configuration may be such that only the negative phase element of the AC power output from the power generator 10 is supplied to the load via the first thyristor 21, only the positive phase element of the AC power is supplied to the lamp 60 via the second thyristor 23, and the output of the power generator 10 is half-wave rectified. Further, in the present embodiment, the single-phase AC power is subjected to conversion. However, the present embodiment is applicable to the multiphase AC power.

For example, the case where the effective value VR' of the output voltage VO is calculated has been explained in the present embodiment. However, the present invention is similarly applicable to a case where an average value of the output voltage VO is calculated. Known technologies can be used as the configuration of generating the average value of the output voltage VO.

Additionally, the case where the load 30 is coupled to the output side of the control circuit 20 has been explained. However, a lamp (not shown) may be coupled to the output side of the control circuit 20. In this case, the lamp 60 to be coupled to the input side of the control circuit 20 includes, for example, a headlight, a tail lamp, a fog lamp, and the like. Further, the lamp to be coupled to the output side of the control circuit 20 includes, for example, a stop lamp, a turn lamp, and the like. Also in this case, a lamp (not shown) is coupled to the output side of the control circuit 20. Therefore, flicker of the brightness caused by the effect of the number of rotations of the power generator 10 does not occur.

### INDUSTRIAL APPLICABILITY

The present invention is applicable to a control circuit that charges a battery, and the like.

### DESCRIPTION OF REFERENCE NUMERALS

1: lamp lighting and battery charging device
10: power generator
20: control circuit
21: first thyristor
23: second thyristor
22: first gate control circuit
24: second gate control circuit
25: switch
26: switch control circuit
30: load
40: fuse
50: battery
60: lamp

## Claims

1. A control circuit (20) configured to rectify an alternate-current voltage output from a power generator (10) configured to rotate in conjunction with an engine of a vehicle or the like, thereby controlling charging of a battery (50) and lighting of a lamp (60), the control circuit (20) comprising:
a first switch (21) having
an anode terminal coupled to one terminal (10-1) of the power generator (10),
a cathode terminal coupled to a positive terminal of the battery (50) and one end of a load (30), and
a gate terminal;
a second switch (23) having
a cathode terminal coupled to the one terminal of the power generator (10) and the anode terminal of the first switch (21),
an anode terminal coupled to one end of the lamp (60), and
a gate terminal;
a third switch (25) having
a source terminal coupled to the cathode terminal of the first switch (21), the one end of the load (30), and the positive terminal of the battery (50),
a drain terminal coupled to the anode terminal of the second switch (23) and the one end of the lamp (60), and
a gate terminal;
a first gate control circuit (22) configured to control the first switch (21), the first gate control circuit (22) having an input terminal (in2) and an output terminal (out2) coupled to the gate terminal of the first switch (21);
a second gate control circuit (24) configured to control the second switch (23), the second gate control circuit (24) having an input terminal (in1) and an output terminal (out1) coupled to the gate terminal of the second switch (23); and
a switch control unit (26) configured to control the third switch (25), the switch control unit (26) having an input terminal (in3) and an output terminal (out3) coupled to the gate terminal of the third switch (25),
wherein the input terminals (in2, in1, in3) of the first gate control circuit (22), the second gate control circuit (24), and the switch control unit (26) are coupled to the anode terminal of the first switch (21), the cathode terminal of the second switch (23), and the one terminal (10-1) of the power generator (10),
wherein in a case that the power generator (10) is not rotated,
the first and second gate control circuits (22, 24) are configured to respectively control the first and second switches(21, 23) to be turned off, and
the switch control unit (26) is configured to control the third switch (25) to be turned on to supply a voltage of the battery (50) to the lamp (60),
wherein in a case that the power generator (10) is rotated,
in a period while the alternate-current voltage is a negative voltage,
the first gate control circuit (22) and the switch control unit (26) are configured to respectively control the first and third switches (21, 25) to be turned off, and
the second gate control circuit (24) is configured to control the second switch (23) to be turned on to supply the negative voltage to the lamp (60), and
in a period while the alternate-current voltage is a positive voltage,
the second gate control circuit (24) is configured to control the second switch (23) to be turned off,
the first gate control circuit (22) is configured to control the first switch (21) be turned on to supply the positive voltage to the battery (50), and
the switch control unit (26) is configured to control the third switch (25) to be turned on and off based on the number of rotations of the power generator (10), so as to supply the voltage of the battery (50) to the lamp (60) while the third switch (25) is in on-state.

2. The control circuit (20) according to claim 1, wherein
the switch control unit (26) is configured to perform control such that a period for supplying the voltage of the battery (50) to the lamp (60) is shortened as a cycle of the alternate current voltage is shorter.

3. The control circuit (20) according to claim 2, wherein the switch control unit (26) is configured to, in a case that the current voltage is not output from the power generator (10), control the third switch (25) to be in on-state, thereby supplying the voltage of the battery (50) to the lamp (60).

4. The control circuit (20) according to claim 2 or 3, wherein the switch control unit (26) comprises:
a triangular wave generation circuit (26-6) configured to generate a triangular wave voltage having a constant peak voltage associated with each cycle of the alternate-current voltage output from the power generator (10);
a voltage converter circuit (26-2) configured to generate a signal of an effective value voltage that is an output voltage applied to the load (30);
a differential amplifier circuit (26-4, 26-5) configured to generate a first voltage signal for controlling a conductive state of the third switch (25), based on a difference voltage between the effective value voltage applied to the load (30) and a predetermined target voltage; and
a comparison circuit (26-7) configured to
compare the first voltage signal and the triangular wave voltage, and control the conductive state of the third switch (25).

5. The control circuit (20) according to any one of claims 1-4, wherein the first switch (21) and the second switch (23) are thyristor elements, and
the third switch (25) is a field-effect transistor.

6. A control method for the control circuit (20) according to any one of claims 1-5, the control method comprises steps of:
in a case that the power generator is not rotated,
turning off the first and second switches (21, 23) respectively by the first and second gate control circuits (22, 24), and
turning on the third switch (25) by the switch control unit (26) to supply a voltage of the battery (50) to the lamp (60);
in a case that the power generator (10) is rotated, in a period while the alternate-current voltage is a negative voltage,
turning off the first and third switches (21, 25) respectively by the first gate control circuit (22) and the switch control unit (26), and
turning on the second switch (23) by the second gate control circuit (24) to supply the negative voltage to the lamp (60); and
in the case that the power generator (10) is rotated, in a period while the alternate-current voltage is a positive voltage,
turning off the second switch (23) by the second gate control circuit (24), turning on the first switch (21) by the first gate control circuit (22) to supply the positive voltage to the battery (50), and
turning on and off the third switch (25) by the switch control unit (26) based on the number of rotations of the power generator, so as to supply the voltage of the battery (50) to the lamp (60) while the third switch (25) is in on-state.

## Patentansprüche

1. Steuerschaltung (20), die dazu konfiguriert ist, einen Wechselstromspannungsausgang von einem Leistungsgenerator (10) gleichzurichten, der dazu konfiguriert ist, zusammen mit einem Motor eines Fahrzeugs oder dergleichen zu rotieren, wodurch Laden einer Batterie (50) und Aufleuchten einer Leuchte (60) gesteuert wird, wobei die Steuerschaltung (20) Folgendes umfasst:
einen ersten Schalter (21) mit
einem Anodenanschluss, der an einen Anschluss (10-1) des Leistungsgenerators (10) gekoppelt ist,
einem Kathodenanschluss, der an einen positiven Anschluss der Batterie (50) und ein Ende eines Verbrauchers (30) gekoppelt ist, und
einem Gate-Anschluss;
einen zweiten Schalter (23) mit
einem Kathodenanschluss, der an den einen Anschluss des Leistungsgenerators (10) und den Anodenanschluss des ersten Schalters (21) gekoppelt ist,
einem Anodenanschluss, der an ein Ende der Leuchte (60) gekoppelt ist, und
einem Gate-Anschluss;
einen dritten Schalter (25) mit
einem Source-Anschluss, der an den Kathodenanschluss des ersten Schalters (21), das eine Ende des Verbrauchers (30) und den positiven Anschluss der Batterie (50) gekoppelt ist,
einem Drain-Anschluss, der an den Anodenanschluss des zweiten Schalters (23) und das eine Ende der Leuchte (60) gekoppelt ist, und
einem Gate-Anschluss;
eine erste Gate-Steuerschaltung (22), die dazu konfiguriert ist, den ersten Schalter (21) zu steuern, wobei die erste Gate-Steuerschaltung (22) einen Eingangsanschluss (in2) und einen Ausgangsanschluss (out2), gekoppelt an den Gate-Anschluss des ersten Schalters (21) aufweist;
eine zweite Gate-Steuerschaltung (24), die dazu konfiguriert ist, den zweiten Schalter (23) zu steuern, wobei die zweite Gate-Steuerschaltung (24) einen Eingangsanschluss (in1) und einen Ausgangsanschluss (out1), gekoppelt an den Gate-Anschluss des zweiten Schalters (23), aufweist; und
eine Schaltersteuereinheit (26), die dazu konfiguriert ist, den dritten Schalter (25) zu steuern, wobei die Schaltersteuereinheit (26) einen Eingangsanschluss (in3) und einen Ausgangsanschluss (out3), gekoppelt an den Gate-Anschluss des dritten Schalters (25) aufweist,
wobei die Eingangsanschlüsse (in2, in1, in3) der ersten Gate-Steuerschaltung (22), der zweiten Gate-Steuerschaltung (24) und der Schaltersteuereinheit (26) an den Anodenanschluss des ersten Schalters (21), den Kathodenanschluss des zweiten Schalters (23) und den einen Anschluss (10-1) des Leistungsgenerators (10) gekoppelt sind,
wobei, in einem Fall, in dem der Leistungsgenerator (10) nicht rotiert,
die erste und die zweite Gate-Steuerschaltung (22, 24) dazu konfiguriert sind, jeweils den ersten und den zweiten Schalter (21, 23) so zu steuern, dass sie ausgeschaltet werden, und
die Schaltersteuereinheit (26) dazu konfiguriert ist, den dritten Schalter (25) so zu steuern, dass er angeschaltet wird, um der Leuchte (60) eine Spannung der Batterie (50) zuzuführen,
wobei, in einem Fall, in dem der Leistungsgenerator (10) rotiert,
in einem Zeitraum, in dem die Wechselstromspannung eine negative Spannung ist,
die erste Gate-Steuerschaltung (22) und die Schaltersteuereinheit (26) dazu konfiguriert sind, jeweils den ersten und den dritten Schalter (21, 25) so zu steuern, dass sie ausgeschaltet werden, und
die zweite Gate-Steuerschaltung (24) dazu konfiguriert ist, den zweiten Schalter (23) so zu steuern, dass er angeschaltet wird, um der Leuchte (60) die negative Spannung zuzuführen, und
in einem Zeitraum, in dem die Wechselstromspannung eine positive Spannung ist,
die zweite Gate-Steuerschaltung (24) dazu konfiguriert ist, den zweiten Schalter (23) so zu steuern, dass er ausgeschaltet wird,
die erste Gate-Steuerschaltung (22) dazu konfiguriert ist, den ersten Schalter (21) so zu steuern, dass er angeschaltet wird, um der Batterie (50) die positive Spannung zuzuführen, und
die Schaltersteuereinheit (26) dazu konfiguriert ist, den dritten Schalter (25) so zu steuern, dass er auf der Grundlage der Anzahl der Rotationen des Leistungsgenerators (10) an- und ausgeschaltet wird, um der Leuchte (60) die Spannung der Batterie (50) zuzuführen, während sich der dritte Schalter (25) in einem angeschalteten Zustand befindet.

2. Steuerschaltung (20) nach Anspruch 1, wobei die Schaltersteuereinheit (26) dazu konfiguriert ist, Steuerung derart durchzuführen, dass ein Zeitraum zum Zuführen der Spannung der Batterie (50) zu der Leuchte (60) verkürzt wird, wenn ein Zyklus der Wechselstromspannung kürzer ist.

3. Steuerschaltung (20) nach Anspruch 2, wobei die Schaltersteuereinheit (26) dazu konfiguriert ist, in einem Fall, in dem die Stromspannung nicht vom Leistungsgenerator (10) ausgegeben wird, den dritten Schalter (25) so zu steuern, dass er sich in einem angeschalteten Zustand befindet, wodurch der Leuchte (60) die Spannung der Batterie (50) zugeführt wird.

4. Steuerschaltung (20) nach Anspruch 2 oder 3, wobei die Schaltersteuereinheit (26) Folgendes umfasst:
eine Dreieckwellen-Erzeugungsschaltung (26-6), die dazu konfiguriert ist, eine Dreieckwellenspannung mit einer konstanten Spitzenspannung zu erzeugen, die mit jedem Zyklus des Wechselstromspannungsausgangs aus dem Leistungsgenerator (10) assoziiert ist;
eine Spannungswandlerschaltung (26-2), die dazu konfiguriert ist, ein Signal einer Effektivwertspannung zu erzeugen, bei der es sich um eine Ausgangsspannung handelt, die an den Verbraucher (30) angelegt ist;
eine Differentialverstärkerschaltung (26-4, 26-5), die dazu konfiguriert ist, ein erstes Spannungssignal zum Steuern eines leitfähigen Zustands des dritten Schalters (25) auf der Grundlage einer Differenzspannung zwischen der Effektivwertspannung, die an den Verbraucher (30) angelegt ist, und einer vorbestimmten Zielspannung zu erzeugen; und
eine Vergleichsschaltung (26-7), die dazu konfiguriert ist,
das erste Spannungssignal und die Dreieckwellenspannung zu vergleichen, und
den leitfähigen Zustand des dritten Schalters (25) zu steuern.

5. Steuerschaltung (20) nach einem der Ansprüche 1-4, wobei der erste Schalter (21) und der zweite Schalter (23) Thyristorelemente sind, und
der dritte Schalter (25) ein Feldeffekttransistor ist.

6. Steuerverfahren für die Steuerschaltung (20) nach einem der Ansprüche 1-5, wobei das Steuerverfahren die folgenden Schritte umfasst:
in einem Fall, in dem der Leistungsgenerator nicht rotiert,
Ausschalten des ersten und des zweiten Schalters (21, 23) durch die erste bzw. die zweite Gate-Steuerschaltung (22, 24), und
Anschalten des dritten Schalters (25) durch die Schaltersteuereinheit (26), um der Leuchte (60) eine Spannung der Batterie (50) zuzuführen;
in einem Fall, in dem der Leistungsgenerator (10) rotiert, in einem Zeitraum, in welchem die Wechselstromspannung eine negative Spannung ist,
Ausschalten des ersten und des dritten Schalters (21, 25) durch die erste Gate-Steuerschaltung (22) bzw. die Schaltersteuereinheit (26), und
Anschalten des zweiten Schalters (23) durch die zweite Gate-Steuerschaltung (24), um der Leuchte (60) die negative Spannung zuzuführen; und
in dem Fall, in dem der Leistungsgenerator (10) rotiert, in einem Zeitraum, in welchem die Wechselstromspannung eine positive Spannung ist,
Ausschalten des zweiten Schalters (23) durch die zweite Gate-Steuerschaltung (24), Anschalten des ersten Schalters (21) durch die erste Gate-Steuerschaltung (22), um der Batterie (50) die positive Spannung zuzuführen, und
An- und Ausschalten des dritten Schalters (25) durch die Schaltersteuereinheit (26) auf der Grundlage der Anzahl der Rotationen des Leistungsgenerators, um der Leuchte (60) die Spannung der Batterie (50) zuzuführen, während sich der dritte Schalter (25) in einem angeschalteten Zustand befindet.

## Revendications

1. Circuit d'asservissement (20) configuré pour redresser une sortie de tension alternative issue d'un générateur d'électricité (10) configuré pour tourner conjointement avec un moteur d'un véhicule ou similaire, asservissant ainsi le chargement d'une batterie (50) et l'éclairage d'une lampe (60), le circuit d'asservissement (20) comprenant :
un premier commutateur (21) ayant
une borne d'anode couplée à une borne (10-1) du générateur d'électricité (10),
une borne de cathode couplée à une borne positive de la batterie (50) et à une extrémité d'une charge (30), et
une borne de grille ;
un deuxième commutateur (23) ayant
une borne de cathode couplée à la borne du générateur d'électricité (10) et à la borne d'anode du premier commutateur (21),
une borne d'anode couplée à une extrémité de la lampe (60), et
une borne de grille ;
un troisième commutateur (25) ayant
une borne de source couplée à la borne de cathode du premier commutateur (21), à l'extrémité de la charge (30), et à la borne positive de la batterie (50),
une borne de drain couplée à la borne d'anode du deuxième commutateur (23) et à l'extrémité de la lampe (60), et
une borne de grille ;
un premier circuit d'asservissement de grille (22) configuré pour asservir le premier commutateur (21), le premier circuit d'asservissement de grille (22) ayant une borne d'entrée (in2) et une borne de sortie (out2) couplées à la borne de grille du premier commutateur (21) ;
un second circuit d'asservissement de grille (24) configuré pour asservir le deuxième commutateur (23), le second circuit d'asservissement de grille (24) ayant une borne d'entrée (in1) et une borne de sortie (out1) couplées à la borne de grille du deuxième commutateur (23) ; et
une unité d'asservissement de commutateur (26) configurée pour asservir le troisième commutateur (25), l'unité d'asservissement de commutateur (26) ayant une borne d'entrée (in3) et une borne de sortie (out3) couplées à la borne de grille du troisième commutateur (25),
dans lequel les bornes d'entrée (in2, in1, in3) du premier circuit d'asservissement de grille (22), du second circuit d'asservissement de grille (24), et de l'unité d'asservissement de commutateur (26) sont couplées à la borne d'anode du premier commutateur (21), à la borne de cathode du deuxième commutateur (23), et à la borne (10-1) du générateur d'électricité (10),
dans lequel, dans un cas où le générateur d'électricité (10) n'est pas mis en rotation,
les premier et second circuits d'asservissement de grille (22, 24) sont configurés pour asservir respectivement les premier et deuxième commutateurs (21, 23) pour qu'ils soient mis sur arrêt, et
l'unité d'asservissement de commutateur (26) est configurée pour asservir le troisième commutateur (25) pour qu'il soit mis sur marche pour fournir une tension de la batterie (50) à la lampe (60),
dans lequel, dans un cas où le générateur d'électricité (10) est mis en rotation,
dans une période pendant que la tension alternative est une tension négative,
le premier circuit d'asservissement de grille (22) et l'unité d'asservissement de commutateur (26) sont configurés pour asservir respectivement les premier et troisième commutateurs (21, 25) pour qu'ils soient mis sur arrêt, et
le second circuit d'asservissement de grille (24) est configuré pour asservir le deuxième commutateur (23) pour qu'il soit mis sur marche pour fournir la tension négative à la lampe (60), et
dans une période pendant que la tension alternative est une tension positive,
le second circuit d'asservissement de grille (24) est configuré pour asservir le deuxième commutateur (23) pour qu'il soit mis sur arrêt,
le premier circuit d'asservissement de grille (22) est configuré pour asservir le premier commutateur (21) pour qu'il soit mis sur marche pour fournir la tension positive à la batterie (50), et
l'unité d'asservissement de commutateur (26) est configurée pour asservir le troisième commutateur (25) pour qu'il soit mis sur marche et arrêt d'après le nombre de rotations du générateur d'électricité (10), de façon à fournir la tension de la batterie (50) à la lampe (60) pendant que le troisième commutateur (25) est dans un état de marche.

2. Circuit d'asservissement (20) selon la revendication 1, dans lequel l'unité d'asservissement de commutateur (26) est configurée pour réaliser un asservissement de sorte qu'une période pour fournir la tension de la batterie (50) à la lampe (60) est raccourcie dès qu'un cycle de la tension alternative est plus court.

3. Circuit d'asservissement (20) selon la revendication 2, dans lequel l'unité d'asservissement de commutateur (26) est configurée pour, dans un cas où la tension de courant n'est pas fournie en sortie par le générateur d'électricité (10), asservir le troisième commutateur (25) pour qu'il soit dans un état de marche, fournissant ainsi la tension de la batterie (50) à la lampe (60).

4. Circuit d'asservissement (20) selon la revendication 2 ou 3, dans lequel l'unité d'asservissement de commutateur (26) comprend :
un circuit de génération d'onde triangulaire (26-6) configuré pour générer une tension d'onde triangulaire ayant une tension de crête constante associée à chaque cycle de la tension alternative fournie en sortie par le générateur d'électricité (10) ;
un circuit convertisseur de tension (26-2) configuré pour générer un signal d'une tension de valeur efficace qui est une tension de sortie appliquée à la charge (30) ;
un circuit amplificateur différentiel (26-4, 26-5) configuré pour générer un premier signal de tension pour asservir un état conducteur du troisième commutateur (25), d'après une tension de différence entre la tension de valeur efficace appliquée à la charge (30) et une tension cible prédéterminée ; et
un circuit de comparaison (26-7) configuré pour
comparer le premier signal de tension et la tension d'onde triangulaire, et
asservir l'état conducteur du troisième commutateur (25).

5. Circuit d'asservissement (20) selon l'une quelconque des revendications 1 à 4, dans lequel le premier commutateur (21) et le deuxième commutateur (23) sont des éléments de thyristor, et
le troisième commutateur (25) est un transistor à effet de champ.

6. Procédé d'asservissement pour le circuit d'asservissement (20) selon l'une quelconque des revendications 1 à 5, le procédé d'asservissement comprend les étapes de :
dans un cas où le générateur d'électricité n'est pas mis en rotation,
mise à l'état d'arrêt des premier et deuxième commutateurs (21, 23) respectivement par les premier et second circuits d'asservissement de grille (22, 24), et
mise à l'état de marche du troisième commutateur (25) par l'unité d'asservissement de commutateur (26) pour fournir une tension de la batterie (50) à la lampe (60) ;
dans un cas où le générateur d'électricité (10) est mis en rotation, dans une période pendant que la tension alternative est une tension négative,
mise à l'état d'arrêt des premier et troisième commutateurs (21, 25) respectivement par le premier circuit d'asservissement de grille (22) et l'unité d'asservissement de commutateur (26), et
mise à l'état de marche du deuxième commutateur (23) par le second circuit d'asservissement de grille (24) pour fournir la tension négative à la lampe (60) ; et
dans le cas où le générateur d'électricité (10) est mis en rotation, dans une période pendant que la tension alternative est une tension positive,
mise à l'état d'arrêt du deuxième commutateur (23) par le second circuit d'asservissement de grille (24), mise à l'état de marche du premier commutateur (21) par le premier circuit d'asservissement de grille (22) pour fournir la tension positive à la batterie (50), et
mise à l'état de marche et d'arrêt du troisième commutateur (25) par l'unité d'asservissement de commutateur (26) d'après le nombre de rotations du générateur d'électricité, de façon à fournir la tension de la batterie (50) à la lampe (60) pendant que le troisième commutateur (25) est dans un état de marche.
